# EUROPEAN PATENT APPLICATION

(11) **EP 2 105 376 A1**
(43) Date of publication of application: **30.09.2009**
(21) Application number: 08102891.2
(22) Date of filing: 25.03.2008
(51) Int. Cl.: B62K 1/00

(54) **Unicycle with off-center height adjustable assembly**

(71) Applicant: Hahn, Stephan, 85667 Oberpframmern (DE)
(72) Inventor: Hahn, Stephan, 85667 Oberpframmern (DE)
(74) Representative: Dossmann, Gérard

(57) **Abstract**

A unicycle with off-center height adjustable assembly has a wheel assembly (10), a height adjustable assembly (20, 20A) and a saddle (30). The wheel assembly (10) has a hub (12) having two hub ends (122) and a center. The height adjustable assembly (20, 20A) is pivotably mounted on the hub ends (122) and has a fork assembly (22, 22A), a seat post assembly (24, 24A) and a bypass extendable section being length extendable along a route without intersecting with the center of the hub (12). The fork assembly (22, 22A) may be fix-length or telescopic. The seat post assembly (24) is telescopic and is mounted on the fork assembly (22, 22A) tangential to the wheel assembly (10). The saddle (30) is pivotally mounted on the seat post assembly (24).

## Description

The present invention relates to a unicycle, and more particularly to a unicycle with off-center height adjustable assembly.

### 2. Description of the Related Art

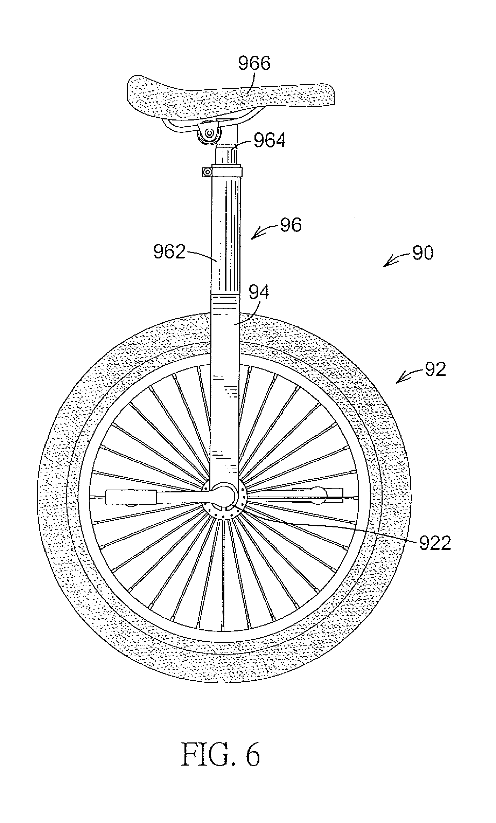

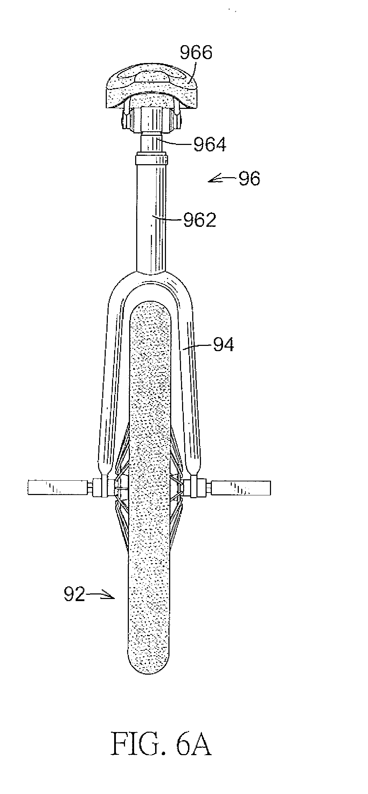

Existing design of a unicycle has been around for many years in an unchanged way. With reference to Fig. 6, a conventional unicycle (90) has a wheel assembly (92), a fork (94) and an adjustable seat post assembly (96). The fork (94) is mounted on two ends of a hub (922) of the wheel assembly (92).

The adjustable seat post assembly (96) has an outer tube (962), an inner tube (964) and a saddle (966).

The outer tube (962) is connected to the fork (94) radially relative to the wheel assembly (92). The inner tube (964) corresponds to and is telescopically mounted in the outer tube (962) and has a distal end. The distal end extends out from the outer tube (962) when the inner tube (964) is maximally retracted in the outer tube (962). The saddle (966) is mounted on the distal end of the outer tube (962).

In such an arrangement, the inner tube (964) can be extended from or retracted into the outer tube (962) to adjust a height of the saddle (966) to make the unicycle (90) for fitting with different needs of different riders.

However, the adjustable height of the unicycle (90) is very limited since the adjustable seat post assembly (96) is radially in line with the wheel assembly (92) so that the minimized height of the unicycle (90) is limited by a length of the outer tube (962) and the diameter of the wheel assembly (92). When the diameter of the wheel assembly (92) and the length of the outer tube (962) have been decided, the conventional unicycle (90) may be only suitable for users with specific body shapes. This problem is badly for using especially for growing young children since it is necessary to keep the seat height at its lowest position and then to raise the saddle (966) constantly with growing of the children. Furthermore, the diameter of the wheel may be reduced to enlarge the adjustable distance for the saddle (966), but this will decrease the possible speed and fun of riding the unicycle (90).

The primary objective of the present invention is to provide a unicycle with off-center height adjustable assembly to enlarge the adjustable height of the unicycle.

The unicycle with off-center height adjustable assembly has a wheel assembly, a height adjustable assembly and a saddle. The wheel assembly has a hub being centrally mounted on a wheel of the wheel assembly. The hub has two hub ends and a center. The height adjustable assembly is pivotally mounted on the hub ends and has a fork assembly, a seat post assembly and a bypass extendable section being length extendable along a route without intersecting with the center of the hub. The fork assembly may be fixed-length or telescopic. The seat post assembly may be telescopic and is mounted on the fork assembly tangential to the wheel assembly. The saddle is pivotally mounted on the seat post assembly. A person may adjust distance between the saddle and the wheel assembly in a wide range since the route is not intersection with the center of the hub.

Other objectives, advantages and novel features of the invention will become more apparent from the following detailed description when taken in conjunction with the accompanying drawings.
Fig. 1 is a perspective view of a unicycle with off-center height adjustable assembly in accordance with the present invention;
Fig. 2 is an exploded perspective view of the unicycle with off-center height adjustable assembly in Fig. 1;
Fig. 3 is a side view of the unicycle with off-center height adjustable assembly in Fig. 1, showing that a seat post is retracted into a seat tubes
Fig. 4 is the side view of the unicycle with off-center height adjustable assembly in Fig. 1, showing that the seat post is stretched out from the seat tube;
Fig. 5 is a side view of a unicycle with an adjustable telescopic fork in accordance with the present invention;
Fig. 5A is a front view of the unicycle in Fig. 5;
Fig. 6 is a side view of a conventional unicycle in accordance with the prior art; and
Fig. 6A is a front view of the conventional unicycle in Fig. 6.

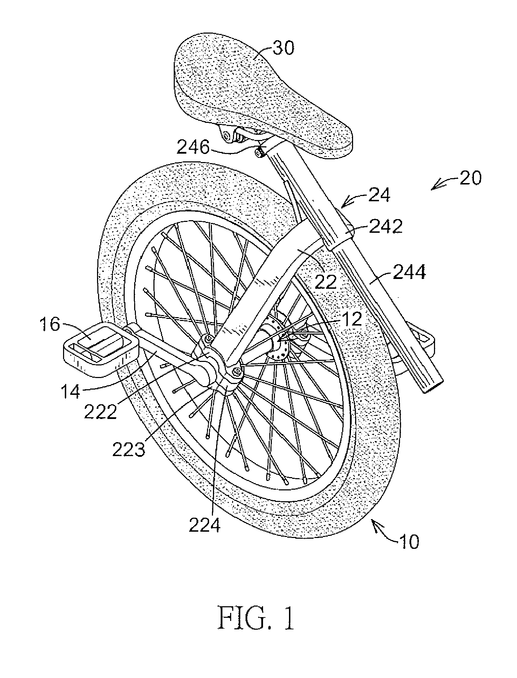

With reference to Figs. 1, 2, 5 and 5A, a unicycle with off-center height adjustable assembly in accordance with the present invention has a wheel assembly (10), a height adjustable assembly (20, 20A) and a saddle (30).

The wheel assembly (10) has a wheel, a hub (12), two cranks (14) and two pedals (16).

The hub (12) is centrally and coaxially mounted on the wheel and has two hub ends (122), a length and a center. The center is located on a median of the length of the hub (12).

The cranks (14) are respectively and securely mounted symmetrically on the hub ends (122) of the hub (12).

The pedals (16) are rotatably mounted on the cranks (14) thereby a person may step thereon to rotate the wheel assembly (10) and rides the unicycle.

The height adjustable assembly (20, 20A) is pivotally mounted on the hub ends (122) of the hub (12), has at least one bypass extendable section being length extendable along a route without intersecting with the center of the hub (12) and has a fork assembly (22, 22A) and a seat post assembly (24, 24A).

The bypass extendable section may belong to the fork assembly (22, 22A) or the seat post assembly (24, 24A), thereby the route may respectively be tangential to the wheel assembly (10) or be parallel to a radial direction of the wheel assembly (10) that are non-intersect with the center of the hub (12).

The fork assembly (22, 22A) corresponds to the wheel assembly (10) and is pivotally mounted on the hub ends (122) and may have a fixed length or be telescopic.

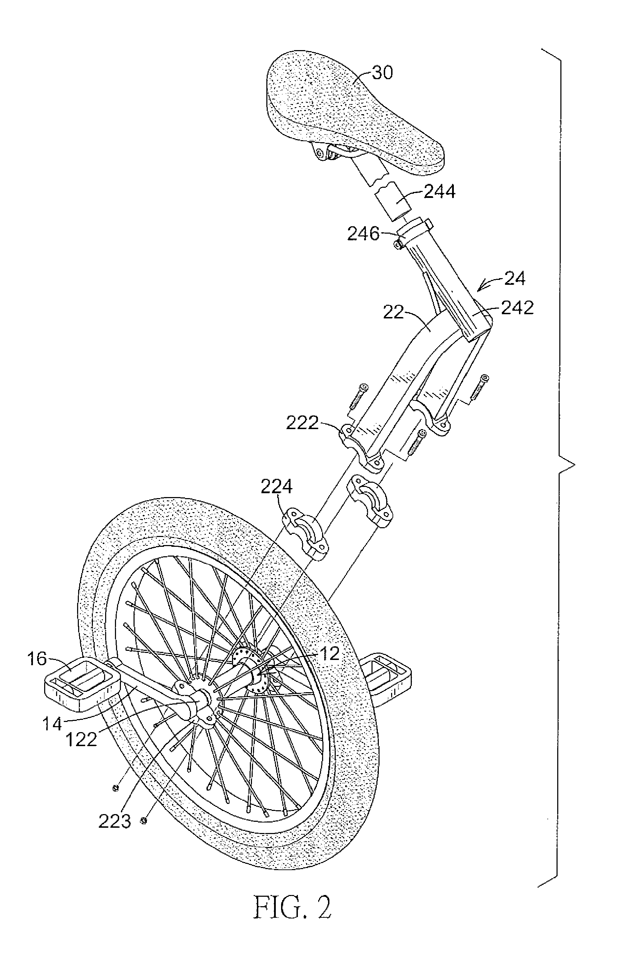

In a first embodiment of the present invention as shown in Figs. 1 and 2, a fixed-length fork assembly (22) is detachably and pivotally mounted on the hub ends (122) of the hub (12) and has two contacting ends (222), two hub clampers (223) and two spacers (224).

The contacting ends (222) respectively correspond to and are rotatably attached to the hub ends (122).

Each hub clamper (223) corresponds to one of the hub ends (122) and one of the contacting ends (222) and is detachably mounted on the corresponding contacting end (222) to clamp the fork assembly (22) on the hub (12).

Each spacer (224) corresponds to one of the hub ends (122) and one of the contacting ends (222) and is clamped between the corresponding hub end (122) and the corresponding contacting end (222), so that the fork assembly (22) can be applied different wheel assembly (10) with a larger diameter.

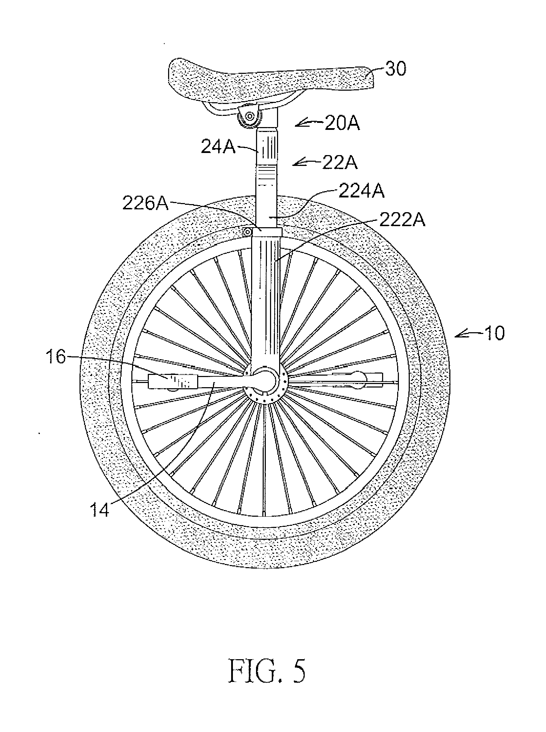

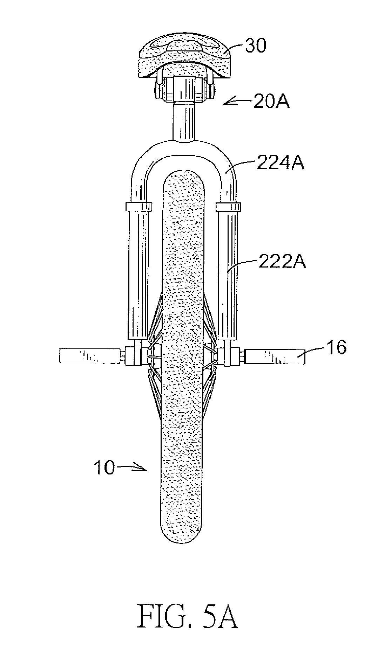

In a second embodiment of the present invention as shown in Figs. 5 and 5A, a telescopic fork assembly (22A) has two outer tubes (222A), an inner fork (224A) and two fork clamps (226A).

The outer tubes (222A) are tubular and are respectively and pivotally mounted on the hub ends (122) and are paralleling to the radial direction of the wheel assembly (10).

The inner fork (224A) is U-shape and has two poles.. Each pole is telescopically mounted inside one of the outer tubes (222A) and forms the bypass extendable section with corresponded outer tube (222A) and is slidably inside the corresponded outer tube (222A) along the route without intersecting with the center of the hub (12).

The fork clamps (226A) are respectively mounted on the outer tubes (222A) and securely hold the poles of the inner fork (224A) on the outer tube (222A).

The seat post assembly (24, 24A) is mounted on the fork assembly (22, 22A), may be securely mounted on the fork assembly (22) tangential to the wheel assembly (10) or may be mounted on the fork assembly (22A) radially in line with the wheel assembly (10).

In the first embodiment of the present invention, the seat post assembly (24) is mounted on the fork assembly (22) and is tangential to the wheel assembly (10), is telescopic and has a seat tube (242), a seat post (244) and a seat post clamp (246).

The seat tube (242) is tubular and is mounted on the fork assembly (22) and is tangential to the wheel assembly (10).

The seat post (244) corresponds to the seat tube (242), is telescopically and slidably mounted in the seat tube (244) and forms the bypass extendable section with the seat tube (242) to move along the route being tangential to the wheel assembly (10).

The seat post clamp (246) is mounted on the seat tube (242), securely holds the seat post (244) on the seat tube (242) in a desired length and has a saddle mounting end.

In the second embodiment of the present invention, the seat post assembly (24A) is mounted on the inner fork (224A) radially relative to the wheel assembly (10), may be telescopic and has a saddle mounting end.

The saddle (30) is pivotally mounted on the saddle mounting end of the seat post assembly (24, 24A).

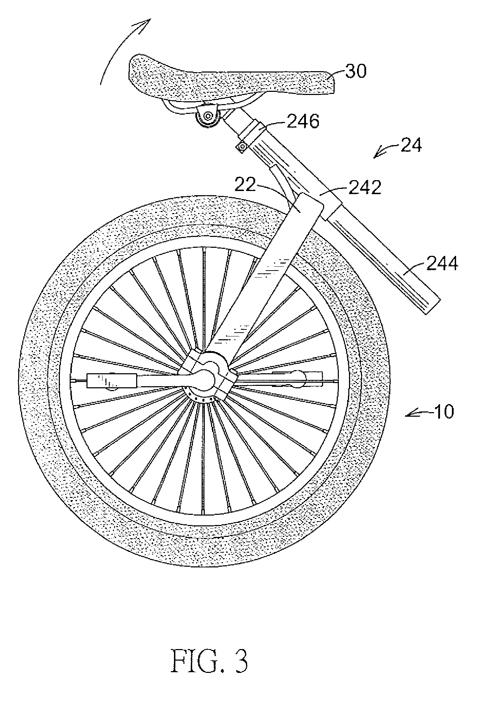

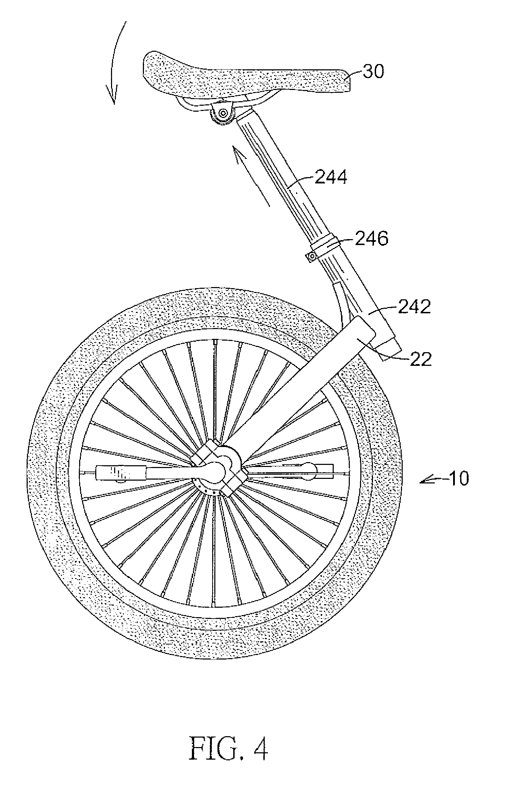

With reference to Figs. 3 and 4, in the first embodiment of the present invention, the saddle (30) is capable of leveling down very close to the wheel assembly (10) since the seat post (244) is capable of retracting and extending along the route tangential to the wheel assembly (10). On the other hand, a height of the second embodiment is also adjusted by extending and retracting the telescopic fork assembly (22A) along the route which is parallel to the radial direction of the wheel assembly (10) thereby being non-intersect with the center of the hub (12). Hence, the saddle (30) can also be positioned very close to the wheel assembly (10).

Even though numerous characteristics and advantages of the present invention have been set forth in the foregoing description, together with details of the structure and function of the invention, the disclosure is illustrative only. Changes may be made in detail, especially in matters of shape, size and arrangement of parts within the principles of the invention to the full extent indicated by the broad general meaning of the terms in which the appended claims are expressed.

## Claims

1. A unicycle comprising a wheel assembly (10), a height adjustable assembly (20, 20A) and a saddle (30), wherein, the wheel assembly (10) has a wheel, a hub (12), two cranks (14) and two pedals (16), the hub (12) being centrally and coaxially formed on the wheel and having two hub ends, a length, a median and a center being located on the median of the length of the hub (12), the height adjustable assembly (20, 20A) being pivotally formed on the hub ends (122) has a fork assembly (22, 22A) and a seat post assembly (24, 24A), the fork assembly (22, 22A) corresponding to the wheel assembly (10) and being pivotally mounted on the hub ends (122) and the seat post assembly (24, 24A) being formed on the fork assembly (22, 22A) and having a saddle mounting end, and the saddle (30) is mounted on the saddle mounting end, **characterized in that** the height adjustable assembly (20, 20A) has at least one bypass extendable section being length extendable along a route without intersecting with the center of the hub (12),

2. The unicycle as claimed in claim 1, wherein
the height adjustable assembly has a bypass extendable section belonging to the seat post assembly (24);
the route is tangential to the wheel assembly (10) and the center of the hub (12);
the fork assembly (22) is fix-length, is detachably and pivotally mounted on the hub ends (122) and has
two contacting ends (222), each one of the contacting ends (222) corresponding to and being rotatably attached to one of the hub ends (122); and
two hub clampers (223), each one of the hub clampers (223) corresponding to one of the hub ends (122) and one of the contacting ends (222) and being detachably mounted on a corresponding one of the contacting ends (222) to clamp the fork assembly (22) on the hub (12);
the seat post assembly (24) is securely formed on the fork assembly (22) tangential to the wheel assembly (10), is telescopic and has
a seat tube (242) being tubular and being formed on the fork assembly (22) tangential to the wheel assembly (10);
a seat post (244) corresponding to the seat tube (242), being telescopically and slidably mounted in the seat tube (242) and forming the bypass extendable section with the seat tube (242) to move along the route being tangential to the wheel assembly (10); and
a seat post clamp (246) being mounted on the seat tube (242), securely holding the seat post (244) on the seat tube (242) and having the saddle mounting end.

3. The unicycle as claimed in claim 1, wherein
the fork assembly (22A) being telescopic and having
two outer tubes (222A) being tubular and being respectively and pivotally mounted on the hub ends (122) and being paralleling to a radial direction of the wheel assembly (10);
an inner fork (224A) having
two poles, each pole being telescopically mounted inside one of the outer tubes (222A) and forming the bypass extendable section with corresponded outer tube (222A) and being slidably inside the corresponded outer tube (222A) along the route; and
two fork clamps (226A) being respectively mounted on the outer tubes (222A) and securely hold the poles of the inner fork (224A) on the outer tubes (222A); and
the seat post assembly (24A) being mounted on the fork assembly (22A) radial in line with the wheel assembly (10) and having the saddle mounting end.

4. The unicycle as claimed in claim 2, wherein the fork assembly (22) having two spacers, each spacer corresponding to one of the hub ends (122) and one of the contacting ends (222) and being clamped between a corresponding one of the hub ends (122) and a corresponding one of the contacting ends (222).

5. The unicycle as claimed in claim 3, wherein the seat post assembly (24A) is telescopic.

6. The unicycle as claimed in claim 1, 2 or 4, wherein the saddle (30) is pivotally mounted on the saddle mounting end.
